# EUROPÄISCHE PATENTSCHRIFT

(11) **EP 3 775 763 B1**
(45) Veröffentlichungstag und Bekanntmachung des Hinweises auf die Patenterteilung: **12.07.2023**
(21) Anmeldenummer: 19718895.6
(22) Anmeldetag: 10.04.2019
(51) Int. Cl.: G01B 11/24, G01N 21/86, G01B 21/04

(54) **ANORDNUNG UND VERFAHREN ZUM BERÜHRUNGSLOSEN BESTIMMEN EINER ABMESSUNG EINER BEWEGTEN MATERIALBAHN**
ARRANGEMENT AND METHOD FOR CONTACTLESS DETERMINATION OF A DIMENSION OF A MOVING MATERIAL WEB
DISPOSITIF ET PROCÉDÉ POUR LA DÉTERMINATION SANS CONTACT D'UNE DIMENSION D'UNE BANDE DE MATÉRIAU EN MOUVEMENT

(30) Priorität: 12.04.2018 DE 102018108696
(43) Veröffentlichungstag der Anmeldung: 17.02.2021
(73) Patentinhaber: IMS Messsysteme GmbH, 42579 Heiligenhaus (DE)
(72) Erfinder: KRAUTHÄUSER, Horst, 42579 Heiligenhaus (DE)
(74) Vertreter: Cohausz & Florack
(86) Internationale Anmeldenummer: PCT/EP2019/059044
(87) Internationale Veröffentlichungsnummer: WO 2019/197445

(56) Entgegenhaltungen:
- EP-A1- 3 002 549
- CN-U- 203 177 806

## Beschreibung

Die vorliegende Erfindung betrifft eine Anordnung zum berührungslosen Bestimmen von mindestens einer Abmessung einer bewegten Materialbahn, insbesondere einer Materialbahn aus lichtundurchlässigem Material, mit einer Hintergrundbeleuchtung, mit optischen Erfassungsmitteln zum Erfassen mindestens eines momentanen Kontrastbilds und mit Auswertungsmitteln, wobei die Hintergrundbeleuchtung den optischen Erfassungsmitteln entgegengesetzt angeordnet ist, wobei in einer Ebene zwischen dem mindestens einen optischen Erfassungsmittel und der Hintergrundbeleuchtung eine kontinuierliche Bewegung der Materialbahn möglich ist und wobei das momentane Kontrastbild zumindest eine Information über mindestens eine Lichtintensität seitlich neben der Materialbahn aufweist. Weiterhin betrifft die vorliegende Erfindung ein entsprechendes Verfahren.

Bei der Herstellung von bahnförmigen Produkten wie z.B. flachgewalzten Bänder aus Stahl oder Nichteisenmetallen stellt die Breite eine wichtige Eigenschaft dar. Diese wird in den Produktionslinien währen des Durchlaufs gemessen, um den Prozess zu steuern oder die Toleranzeinhaltung nachzuweisen.

Hierzu werden üblicherweise die räumlichen Positionen der zwei sich in der Bewegungsrichtung erstreckenden Kanten der Materialbahn erfasst. Aus der Differenz zwischen den jeweiligen Positionen wird die Breite berechnet.

Die Erfassung der Bahnkantenpositionen kann berührend oder berührungslos erfolgen. Eine erste Lösung zum berührungslosen Erfassen besteht zum Beispiel darin, die Eigenstrahlung der Materialbahn zu erfassen, wenn die Materialbahn warm ist, typischerweise über 600°C. Alternativ kann eine berührungslose Erfassung z.B. durch elektromagnetische oder optische Sensoren erfolgen.

Zum Erfassen der Abmessungen einzelner, einteiliger Werkstücke ist zum Beispiel aus der EP 3 002 549 A1 bekannt, das Werkstück auf einem bewegbaren Tisch mit einem transparenten Einsatz und mit seitlich vom Werkstück angeordneten Vergleichselementen zu legen und von unten zu bestrahlen und mehrere Bildaufnahmen zusammenzusetzen, um ein Bild des gesamten Werkstücks zu erhalten.

Bei einer optischen Erfassung werden die Bahnkantenpositionen bekannter Weise durch Beleuchten einer Seite der Materialbahn und durch Erfassen des Abschattens der Beleuchtung durch die Materialbahn von der anderen Seite der Materialbahn erfasst. Dabei wird üblicher Weise eine oder mehrere Kameras mit jeweils einer einzigen Pixelreihe, auch Zeilenkameras genannt, verwendet, die dazu eingerichtet sind Hell/Dunkel Übergänge zu erfassen. Die Genauigkeit der Bestimmung der Position der Bahnkante hängt in erster Linie von der Pixelauflösung der Kamera ab. Zur Bestimmung der Breite der Materialbahn werden üblicherweise die Pixelpositionen der Hell/Dunkel-Übergänge, die die Position einer Bahnkante entsprechen, in Koordinaten eines mit den Kameras zusammenhängenden kartesischen Systems umgerechnet. Hierfür wird ein Zusammenhang zwischen Pixelposition und kartesischen Koordinaten verwendet, der im Rahmen einer Kalibrierung als Funktion Position[mm] = f(Pixel) oder als Lookup Tabelle gespeichert wurde.

Für die Kalibrierung wird ein Referenzkontrastbild verwendet, das während einer Produktionspause aufgenommen worden ist. Dabei wird die Materialbahn entfernt und eine Schlitzblende auf einer Sollhöhe angeordnet. Bei der Kalibrierung sind die Position und die Abmessungen der Schlitzblende in dem kartesischen System der Kamera bekannt, so dass der Zusammenhang Pixelposition-kartesische Koordinate bestimmt werden kann.

Ein solches Verfahren ermöglicht ein Bestimmen der Breite der Materialbahn während eines Produktionsvorgangs, bei dem die Materialbahn bewegt wird. Jedoch führen Änderungen der Eigenschaften der Erfassungsmittel, die in der Praxis häufiger vorkommen, zu Ungenauigkeiten in dem Ergebnis, so dass dieses unzuverlässig wird.

Die Position der Kameras kann sich zum Beispiel verändern, so dass sich der Abstand zwischen der einzelnen Kamera um einen Wert ΔOffset im Vergleich zu dem Abstand zwischen den Kameras bei der Kalibrierung ändert, was zu einem entsprechenden Messfehler führt. Ein Messfehler kann sich auch aus einer Änderung der Winkelposition der Kameras ergeben. Solche Änderungen können beispielsweise durch Temperaturänderungen verursacht werden, wie z.B. eine Änderung der Umgebungstemperatur (Tag/Nacht und Sommer/Winter) oder eine schwankende Wärmestrahlung der Materialbahn.

Üblicherweise wird für die Erfassung die Kamera mit einem vorbestimmten Abstand zur Ebene, in der sich die Materialbahn bewegt, angeordnet und der Fokalabstand der Kamera entsprechend eingestellt. In der Praxis können Höhenabweichungen bei der Führung der Materialbahn entstehen, so dass der Abstand zwischen der Kameraebene und der Bewegungsebene der Materialbahn abweicht. Dies führt zu einer für das Bestimmen der Breite der Materialbahn nachteiligen Verschiebung der Hell/DunkelÜbergänge auf dem erfassten Kontrastbild, die den Positionen der Bahnkanten entsprechen.

Eine Höhenabweichung kann zum Beispiel auch dadurch entstehen, dass die Materialbahn nur mit einer Kamera beobachtet wird. Ist der Abstand von der Materialbahn zur Kamera gering, erscheint die Materialbahn schmal zu sein; ist der Abstand zwischen der Materialbahn und der Kamera groß, so erscheint die Materialbahn breiter zu sein. Somit führt eine Abweichung des Abstands zwischen Materialbahn und Kamera zu einem Messfehler. Ein solcher Messfehler lässt sich zum Beispiel durch Anordnen der Kamera senkrecht über den Bahnkanten oder auch durch Einsatz mehrerer Kameras in einem stereoskopischen System vermeiden. In einem stereoskopischen System ist der Einsatz von mehreren Kameras erforderlich.

Problematisch sind hierbei jedoch Änderungen an den Positionen der Kameras, die zu einem Messfehler führen, der weder berechnet noch berücksichtigt werden kann. Eine Anordnung zum Erfassen einer Abmessung einer bewegten Materialbahn mit einer Kamera, mit einer Lichtquelle und mit einem zwischen der Materialbahn und der Lichtquelle angeordneten Abschattungselement ist beispielsweis aus der CN 203177806 U bekannt.

Ausgehend von diesem Stand der Technik liegt der vorliegenden Erfindung die Aufgabe zu Grunde, das berührungslose Bestimmen der Abmessung einer bewegten Materialbahn zu vereinfachen und zu verbessern und insbesondere zuverlässiger zu gestalten.

Die oben genannte Aufgabe wird gemäß einer ersten Lehre der vorliegenden Erfindung durch eine Anordnung gemäß Anspruch 1 zum berührungslosen Bestimmen von mindestens einer Abmessung einer bewegten Materialbahn, insbesondere einer Materialbahn aus lichtundurchlässigem Material, mit einer Hintergrundbeleuchtung, mit optischen Erfassungsmitteln zum Erfassen mindestens eines momentanen Kontrastbilds und mit Auswertungsmitteln, wobei die Hintergrundbeleuchtung den optischen Erfassungsmitteln entgegengesetzt angeordnet ist, wobei in einer Ebene zwischen dem mindestens einen optischen Erfassungsmittel und der Hintergrundbeleuchtung eine kontinuierliche Bewegung der Materialbahn (4) möglich ist, wobei das momentane Kontrastbild zumindest eine Information über mindestens eine Lichtintensität seitlich neben der Materialbahn aufweist, wobei mindestens ein die Hintergrundbeleuchtung teilweise abdeckendes Abschattungselement zwischen der Hintergrundbeleuchtung und der Materialbahn angeordnet ist, wobei das Abschattungselement teilweise von der Materialbahn abgedeckt ist, und wobei das momentane Kontrastbild ein Abschatten der Hintergrundbeleuchtung durch die Materialbahn und durch das Abschattungselement wiedergibt, dadurch gelöst, dass die Auswertungsmittel dazu eingerichtet sind, das momentane Kontrastbild mit einem Referenzkontrastbild zu vergleichen, wobei das Referenzkontrastbild einem Abschatten der Hintergrundbeleuchtung nur durch das Abschattungselement entspricht, und dass die Auswertungsmittel dazu eingerichtet sind, aus dem Vergleich einen Korrekturfaktor zu bestimmen und diesen Korrekturfaktor für das Bestimmen der realen Abmessung der Materialbahn zu berücksichtigen, wobei die reale Abmessung der tatsächlichen Breite der Materialbahn entspricht, bei dem das momentane Kontrastbild erzeugt wurde.

Eine solche Anordnung ermöglicht ein zeitgleiches Erfassen der Positionen der Bahnkanten und des Abschattungselements, so dass ein durch Änderungen der Erfassungsmittel verursachter Messfehler erfasst und bei der Berechnung der Bahnbreite berücksichtigt werden kann. Eine solche Anordnung ermöglicht also, die tatsächliche Bahnbreite auf einfache, genaue und zuverlässige Weise während der Produktion zu bestimmen.

Die erfindungsgemäße Anordnung dient zum berührungslosen Bestimmen von mindestens einer Abmessung einer bewegten Materialbahn, insbesondere einer Materialbahn aus lichtundurchlässigem Material. Eine solche Materialbahn kann beispielsweise aus einer Produktionsanlage ausgeführt werden, um zu einer Rolle aufgerollt zu werden, so dass die Materialbahn sich zwischen der Produktionsanlage und der Rolle kontinuierlich bewegt und gespannt ist. Vorstellbar ist ebenso eine Materialbahn, die zwischen zwei Vorrichtungen einer Produktionsanlage verläuft.

Bei der Materialbahn kann es sich beispielsweise um eine Bahn aus Metall, zum Beispiel in Form einer Metallfolie, aus Papier, aus Kunststoff, aus einem lichtundurchlässigen Gewebe, aus einem Verbundwerkstoff oder aus einem mehrschichtigen Material handeln. Die Materialbahn ist vorzugsweise flach ausgebildet und weist eine im Vergleich zu ihrer Breite große Länge auf. Bei der zu bestimmenden Abmessung der Materialbahn handelt es sich dann vorzugsweise um eine Breite. Zudem weist die Materialbahn eine obere Seite und eine untere Seite auf. Die lateralen Ränder der Materialbahn werden im Folgenden als Bahnkanten bezeichnet.

Die Hintergrundbeleuchtung kann ein oder mehrere Leuchtmittel aufweisen. Sind mehrere Leuchtmittel vorgesehen, so weisen diese vorzugsweise möglichst ähnlichen Leuchteigenschaften auf und sind in einer Reihe oder in einer Fläche angeordnet. Die Hintergrundbeleuchtung kann einen Diffusor zum Homogenisieren der Leuchtkraft des einen oder der mehreren Leuchtmittel aufweisen. Bei dem Diffusor kann es sich zum Beispiel um ein opakes Kunststoffwerkstück oder um ein Milchglaswerkstück handeln. Die Hintergrundbeleuchtung ist vorzugsweise an der unteren Seite der Materialbahn angeordnet.

Die optischen Erfassungsmittel sind zum Erfassen mindestens eines momentanen Kontrastbilds eingerichtet. Die optischen Erfassungsmittel können eine oder mehrere Kameras mit jeweils einem Erfassungsbereich aufweisen.

Eine solche Kamera weist vorzugsweise einen Sensor mit einer Mehrzahl an Pixeln auf, wobei die Pixel in Reihen als Fläche angeordnet sind. Entsprechend weist die betroffene Kamera einen Erfassungsbereich in Form eines Streifen bzw. einer Fläche auf. Jeder Pixel ist mit einer Pixelposition definiert und ist zum Erfassen einer Lichtintensität ausgerichtet. Im Rahmen der vorliegenden Erfindung wird als Sensor vorzugsweise eine Flächenkamera eingesetzt. Dadurch kann eine Bewegung des Sensors, die das Ergebnis eines Erfassens verfälschen könnte, einfach und schnell festgestellt werden.

Eine solche Kamera kann eine Schwarz/Weiß-Kamera sein, die eine Lichtintensität in Form einer Graustufe wiedergibt. Die Kamera kann ebenfalls eine Farbkamera sein, die nicht nur eine Information über eine Lichtintensität erzeugt, sondern auch eine Farbe.

Weisen die Erfassungsmittel mehrere Kameras auf, so sind diese vorzugsweise in einer Ebene angeordnet. Zusammen weisen die Kameras einen gesamten Erfassungsbereich, der sich aus den jeweiligen Erfassungsbereichen der einzelnen Kameras ergibt. Im Folgenden wird die Verteilung der Lichtintensität über einen Erfassungsbereich mit dem Begriff Lichtintensitätsverteilung bezeichnet.

Unter dem Begriff momentanes Kontrastbild wird das Ergebnis eines Erfassens einer aktuellen Lichtintensitätsverteilung durch die Erfassungsmittel verstanden. Ein momentanes Kontrastbild weist also Informationen über Lichtintensitäten auf, wobei jeder Lichtintensität eine Pixelposition zugeordnet ist. Mehrere momentane Kontrastbilder können zum Beispiel in einem Film zeitlich hintereinander angeordnet sein. Jedem momentanen Kontrastbild kann ein Zeitpunkt zugeordnet sein.

Die Anordnung weist Auswertungsmittel auf. Dabei handelt es sich vorzugsweise um eine Rechnereinheit mit einem Prozessor und einem Datenspeicher, auf den Programmsätze und Computeralgorithmen gespeichert und ausgeführt werden können. Die Auswertungsmittel sind zudem vorzugsweise mit den Erfassungsmitteln über eine Kommunikationsverbindung verbunden, beispielsweise über eine Kabelverbindung. Alternativ kann die Kommunikationsverbindung drahtlos sein.

Die Materialbahn bewegt sich in einer Ebene zwischen dem mindestens einen optischen Erfassungsmittel und der Hintergrundbeleuchtung. So überlappt die Materialbahn die Hintergrundbeleuchtung und es entsteht, aus der Perspektive der Erfassungsmittel, ein Abschatten der Hintergrundbeleuchtung durch die Materialbahn.

Das momentane Kontrastbild weist zumindest eine Information über mindestens eine Lichtintensität seitlich neben der Materialbahn auf. Dies ist insbesondere durch Erstrecken des Erfassungsbereichs eines Erfassungsmittels oder des gesamten Erfassungsbereichs über die Bahnkanten hinaus.

Das Abschattungselement ist vorzugsweise aus einem lichtundurchlässigen Material ausgebildet und weist Abmessungen auf, die bekannt sind. Zudem kann das Material des Abschattungselements möglichst temperaturunabhängig sein bzw. einen möglichst geringen Wärmeausdehnungskoeffizient aufweisen, so dass sich bei einer Änderung der Temperatur das Abschattungselement möglichst wenig verformt.

Das Abschattungselement deckt die Hintergrundbeleuchtung teilweise ab und ist zwischen der Hintergrundbeleuchtung und der Materialbahn angeordnet. Weiterhin ist das Abschattungselement zumindest teilweise von der Materialbahn und zumindest teilweise von der Materialbahn nicht gedeckt. Entsprechend ist die Lichtintensitätsverteilung, die die Erfassungsmittel in einem momentanen Kontrastbild erfassen, durch die Position der Bahnkanten und von der Formgebung des Abschattungselements beeinflusst.

Weiterhin sind die Erfassungsmittel vorzugsweise dazu eingerichtet, eine das momentane Kontrastbild mit einer maximalen Schärfe bei einer Schärfentiefe zu erfassen. Das Abschattungselement ist vorzugsweise mit einem Abstand zu den Erfassungsmitteln angeordnet, der der Schärfentiefe nah ist. Dadurch kann ein Abschatten der Hintergrundbeleuchtung durch das Abschattungselement mit einer hohen Schärfe aufgenommen werden, so dass die Genauigkeit die reale Abmessung der Materialbahn insgesamt genauer bestimmt werden kann.

Somit ist, aus der Perspektive der Erfassungsmittel betrachtet, ein erster Bereich der Hintergrundbeleuchtung nur durch die Materialbahn gedeckt und ein zweiter Bereich der Hintergrundbeleuchtung sowohl von der Materialbahn, als auch von dem Abschattungselement abgedeckt. Dadurch kann, aus dem Bereich des momentanen Kontrastbilds, der die Lichtintensitätsverteilung in dem ersten Bereich der Hintergrundbeleuchtung wiedergibt, die Breite der Materialbahn bestimmt werden. Gleichzeitig können, aus dem Bereich des momentanen Kontrastbilds, der die Lichtintensitätsverteilung in dem zweiten Bereich der Hintergrundbeleuchtung wiedergibt, die Formgebung und die Position des Abschattungselements bestimmt werden.

Die Auswertungsmittel sind dazu eingerichtet, das momentane Kontrastbild mit einem Referenzkontrastbild zu vergleichen. Als Referenzkontrastbild wird das Ergebnis eines Referenzerfassens der Lichtintensitätsverteilung während einer Produktionspause verstanden.

Beim Referenzerfassen wird vorzugsweise die Materialbahn entfernt, so dass die Lichtintensitätsverteilung beim Erfassen des Referenzkontrastbilds einem Abschatten der Hintergrundbeleuchtung nur durch das Abschattungselement entspricht. Weiterhin wird beim Referenzerfassen das Abschattungselement vorzugsweise auf einer Sollhöhe angebracht, die in einem späteren Produktionsvorgang für die Materialbahn eingehalten werden soll. Dabei ist also der Abstand zwischen der Erfassungsmittelebene und dem Abschattungselement bekannt. Die Position und die Abmessungen des Abschattungselements während des Referenzerfassens definieren einen Referenzzustand. Das Referenzerfassen erfolgt vorzugsweise regelmäßig in größeren Zeitabständen von Wochen, Monaten oder auch Jahren.

Gemäß einer zweiten Lehre der vorliegenden Erfindung wird die oben genannte Aufgabe durch eir Verfahren gemäß Anspruch 8 zum berührungslosen Bestimmen von mindestens einer Abmessung einer kontinuierlich bewegten Materialbahn, insbesondere einer Materialbahn aus lichtundurchlässigem Material und insbesondere durch eine Anordnung der zuvor beschriebenen Art gelöst, bei dem eine erste Seite der Materialbahn beleuchtet wird, bei dem ein momentanes Kontrastbild auf einer zweiten Seite der Materialbahn erfasst wird, wobei das momentane Kontrastbild ein Abschatten der Hintergrundbeleuchtung durch die Materialbahn und durch ein Abschattungselement wiedergibt, wobei das Abschattungselement teilweise von der Materialbahn abgedeckt ist, wobei das momentane Kontrastbild zumindest eine Information über mindestens eine Lichtintensität seitlich neben der Materialbahn aufweist, bei dem eine momentane Abmessung der Materialbahn bestimmt wird, bei dem das momentane Kontrastbild mit einem Referenzkontrastbild verglichen wird, wobei das Referenzkontrastbild einem Abschatten der Hintergrundbeleuchtung nur durch das Abschattungselement entspricht, bei dem ein Korrekturfaktor in Abhängigkeit des Ergebnisses des Vergleichs bestimmt wird und bei dem eine reale Abmessung der Materialbahn in Abhängigkeit der momentanen Abmessung und unter Berücksichtigung des Korrekturfaktors bestimmt wird.

Die zeitgleiche Wiedergabe des Abschattens der Hintergrundbeleuchtung durch die Materialbahn und des Abschattens der Hintergrundbeleuchtung durch das Abschattungselement im selben momentanen Kontrastbild ermöglicht insbesondere, den aktuellen Zustand der Anordnung bei dem Bestimmen einer Abmessung bzw. der Breite der Materialbahn zu berücksichtigen. Vorteilhaft ist hier im Vergleich zu bekannten Vorgehensweisen, dass sich die tatsächliche bzw. reale Breite der Materialbahn zuverlässig bestimmen lässt.

Aus dem Vergleich zwischen dem momentanen Kontrastbild und dem Referenzkontrastbild ergibt sich gegebenenfalls ein Unterschied in der jeweiligen erfassten Formgebung und Position des Abschattungselements. Daraus kann ein Messfehler festgestellt und ein Korrekturfaktor entsprechend bestimmt werden.

Gemäß dem oben genannten Verfahren wird eine momentane Abmessung der Materialbahn bestimmt. Unter dem Begriff momentane Abmessung wird die Abmessung verstanden, die sich allein aus einem momentanen Kontrastbild herleiten lässt, ohne Vergleich mit einem weiteren Kontrastbild und ohne Berücksichtigung einer eventuellen Änderung der Anordnung.

Für das Bestimmen einer solchen momentanen Abmessung können eine oder mehrere Bereiche des momentanen Kontrastbilds durch die Auswertungsmittel ausgewählt werden. Dabei entsprechen die ausgewählten Bereiche Pixelzeilen der Erfassungsmittel, die die Lichtintensitätsverteilung in einem von dem Abschattungselement nicht abgedeckten Abschnitt des Erfassungsbereichs erfassen. Die Lichtintensitäten der einzelnen Pixelpositionen in den ausgewählten Bereichen des momentanen Kontrastbilds werden vorzugsweise durch die Auswertungsmittel untereinander verglichen, um die Pixelposition eventueller Kontraste bzw. Hell/Dunkel-Übergänge zu ermitteln.

Da in den ausgewählten Bereichen des Kontrastbilds die Lichtintensitätsverteilung nur durch ein Abschatten der Hintergrundbeleuchtung durch die Materialbahn beeinflusst ist, entspricht die Position der Kontraste der Position der Bahnkanten. Durch einen in den Auswertungsmitteln gespeicherten Zusammenhang zwischen Pixelposition und kartesischen Koordinaten kann die momentane Abmessung bestimmt werden.

Weiterhin wird das momentane Kontrastbild mit einem Referenzkontrastbild verglichen. Das momentane Kontrastbild und das Referenzkontrastbild geben beide eine Lichtintensitätsverteilung wieder, die durch das Abschattungselement beeinflusst ist. Jedoch wurde, im Unterschied zu dem Referenzkontrastbild, das momentane Kontrastbild in einem momentanen, eventuell durch Temperaturänderung oder weitere Änderungen der Anordnung erzeugt.

Aus dem Vergleich des momentanen Kontrastbilds mit dem Referenzkontrastbild in ausgewählten Bereichen, in denen die Lichtintensitätsverteilung durch das Abschattungselement beeinflusst wurde, kann festgestellt werden, in wie fern sich die Anordnung eventuell geändert hat. Daraus kann ein Korrekturfaktor bestimmt werden. Der Korrekturfaktor kann zum Beispiel einen Versatz der Kameras untereinander oder eine Drehung der Kameras im Vergleich zur Materialbahnebene beschreiben.

Dann wird dieser Korrekturfaktor für das Bestimmen der realen Abmessung der Materialbahn in Abhängigkeit der momentanen Abmessung berücksichtigt. Dies erfolgt vorzugsweise durch Ausführen eines Computerprogramms auf der Rechnereinheit der Auswertungsmittel. Das Ergebnis, also die reale Abmessung bzw. Breite entspricht der tatsächlichen Breite der Materialbahn an dem Zeitpunkt, bei dem das momentane Kontrastbild erzeugt wurde.

Im Folgenden werden verschiedene Ausführungsformen der Anordnung und des Verfahrens beschrieben, wobei die einzelnen Ausführungsformen jeweils für die Anordnung und für das Verfahren gelten. Zudem sind die einzelnen Ausführungsformen untereinander kombinierbar.

Bei einer ersten Ausführungsform der Anordnung sind die Auswertungsmittel dazu eingerichtet, anhand des momentanen Kontrastbilds eine Abmessung der Materialbahn und die Formgebung des Abschattungselements zeitgleich zu bestimmen. Dadurch kann beim Bestimmen der realen Abmessung der Materialbreite der tatsächliche Zustand der Anordnung berücksichtigt werden. Zudem können dadurch bei jedem Erfassen eines momentanen Kontrastbilds Informationen über den zeitlich entsprechenden Zustand der Anordnung erhalten werden.

Ein solches Bestimmen kann zum Beispiel durch zeitgleiche Auswahl mehrerer Pixelreihen des einen momentanen Kontrastbilds erfolgen, wobei die einzelnen Pixelreihen jeweils die Lichtintensitätsverteilung in dem von dem Abschattungselement beeinflussten Abschnitt des Erfassungsbereichs und in dem von dem Abschattungselement nicht beeinflussten Abschnitt des Erfassungsbereichs wiedergeben. Die Auswahl der einzelnen ausgewählten Pixelreihen bzw. deren Pixelposition kann automatisch durch die Auswertungsmittel erfolgen. So können auch im Falle einer eventuellen Änderung der Anordnung die Abmessung der Materialbahn und die Formgebung des Abschattungselements weiterhin bestimmt werden.

Eine Vielfalt an Formgebungen ist für das Abschattungselement vorstellbar. Das Abschattungselement ist jedoch vorzugsweise im Wesentlichen flach ausgebildet. Zudem können am Rand oder in dem inneren Bereich des Abschattungselements einzelne oder nebeneinander angeordnete Schlitzen, durchdringenden Bohrungen oder dergleichen vorgesehen sein.

Bei einer weiteren Ausführungsform der Anordnung ist das mindestens eine Abschattungselement als Schlitzblende, vorzugsweise mit mindestens zwei Schlitzen ausgebildet. Schlitzblenden sind einfach zu erzeugen, so dass ein solches Abschattungselement eine einfache und kostengünstige Gestaltung der Anordnung ermöglicht.

Vorzugsweise weist das Abschattungselement eine oder mehrere Schlitze auf. Ist zum Beispiel ein einzelner Schlitz vorgesehen, so ist vorzugsweise die Breite des Schlitzes bekannt, um einerseits den Zusammenhang zwischen einer Pixelposition und einer entsprechenden Position im kartesischen Koordinatensystem zu bestimmen, und andererseits eine eventuelle Änderung der Anordnung feststellen zu können.

Sind mehrere Schlitze vorgesehen, so können diese nebeneinander mit einem bekannten Abstand untereinander am Rand des Abschattungselements angeordnet sein. Dadurch können mehrere Kontraste auf einem entsprechend erfassten momentanen Kontrastbild erkannt werden und so die Genauigkeit des Bestimmens des Korrekturfaktors, also schließlich der realen Abmessung, erhöht werden.

Weiterhin können die Schlitze in ungleichmäßigen Abständen angeordnet sein. So lassen sich die einzelnen Schlitze auf dem momentanen Kontrastbild einfacher erkennen, so dass Verwechselungen vermieden werden können. Dadurch können Änderungen der Anordnung leichter und auf zuverlässige Weise erkannt werden.

Bei einer weiteren Ausführungsform der Anordnung sind zwei Abschattungselemente in einer Ebene zwischen der Hintergrundbeleuchtung und der Materialbahn angeordnet, wobei die zwei Abschattungselemente voneinander beabstandet sind. So ergibt sich ein Bereich, in dem die Hintergrundbeleuchtung von keinem Abschattungselement, sondern nur von der Materialbahn abgedeckt ist. Dieser Bereich ermöglicht, wie im Falle der Verwendung eines einzelnen Abschattungselements, ein Erfassen eines Kontrastübergangs an der Kante der Materialbahn. Dadurch ist das Bestimmen der Position der Bahnkanten weiterhin möglich.

Durch ein solches Anordnen von zwei Abschattungselementen kann die Anzahl der auf dem momentanen Kontrastbild erkennbaren Hell/Dunkel-Übergänge erhöht werden, so dass die Genauigkeit und Zuverlässigkeit der Korrektur für das Bestimmen der realen Abmessung verbessert werden kann.

Ein weiterer Vorteil einer solchen Anordnung liegt in der Erhöhung der Störsicherheit, zum Beispiel wenn Verschmutzungen vorliegen. Sind zum Beispiel einzelne Schlitze durch Verschmutzungen abgedeckt, so kann die Messung anhand der weiteren Schlitze ungestört weiter durchgeführt werden.

Bei einer weiteren Ausführungsform der Anordnung sind mindestens zwei optische Erfassungsmittel vorgesehen, wobei die optischen Erfassungsmittel jeweils als Flächenkamera mit mindestens zwei Pixelreihen ausgebildet sind. Hierbei liegen die Erfassungsbereiche der Flächenkameras vorzugsweise jeweils in einem Bereich, in dem die Hintergrundbeleuchtung von einem Abschattungselement abgedeckt ist, und in einem Bereich, in dem die Hintergrundbeleuchtung nur von der Materialbahn abgedeckt ist.

Dadurch können eventuelle Bewegungen der Flächenkameras einfach festgestellt werden, auch wenn sich die Flächenkameras unabhängig voneinander bewegen.

Bei einer weiteren Ausführungsform der Anordnung sind mindestens vier optische Erfassungsmittel vorgesehen, wobei jeweils mindestens zwei optische Erfassungsmittel dazu eingerichtet sind, ein momentanes Kontrastbild im Bereich einer Bahnkante der Materialbahn gleichzeitig zu erfassen. Dadurch kann die Position jeder Bandkante von mindestens zwei Kameras in einer stereoskopischen Konfiguration erfasst werden. Dies ermöglicht insbesondere eine eventuelle Höhenverschiebung zwischen der Materialbahn und der Erfassungsmitteln zu erkennen.

Bei einer weiteren Ausführungsform der Anordnung ist eine Mehrzahl an optischen Erfassungsmitteln vorgesehen, die jeweils zum Erfassen mindestens eines zweidimensionalen momentanen Kontrastbilds vorgesehen sind, und die Auswertungsmittel sind dazu eingerichtet, die jeweiligen Kontrastbilder zu einem gesamten momentanen Kontrastbild zusammenzufügen.

Hier handelt es sich bei den Erfassungsmitteln vorzugsweise um Flächenkameras. Der Erfassungsbereich der einzelnen Flächenkameras erstreckt sich vorzugsweise über einen Bereich, in dem die Hintergrundbeleuchtung nur von der Materialbahn abgedeckt ist, und über einen Bereich, in dem die Hintergrundbeleuchtung durch ein Abschattungselement abgedeckt ist. So kann die Anzahl an Flächenkameras bis zu zwei reduziert werden.

Weiterhin kann jedem Erfassungsmittel eine Position in der Erfassungsmittelebene zugeordnet und in dem Datenspeicher der Auswertungsmittel gespeichert werden. Dadurch kann beim Zusammenfügen der von den jeweiligen Kameras erfassten momentanen Kontrastbilder die räumliche Position der einzelnen Kameras berücksichtigt werden. Als Ergebnis weist das gesamte momentane Kontrastbild Informationen über die Lichtintensitätsverteilung über den gesamten Erfassungsbereich auf.

Bei einer ersten Ausführungsform des Verfahrens laufen die Erfassung des momentanen Kontrastbilds, der Vergleich zwischen dem momentanen Kontrastbild und dem Referenzkontrastbild und das Bestimmen der Abmessung der Materialbahn kontinuierlich ab. Dadurch lässt sich aus einer Reihe momentaner Kontrastbilder die zeitliche Entwicklung der realen Abmessung verfolgen, was für die Qualitätssicherung bei der Produktion der Materialbahn vorteilhaft ist.

Bei einer weiteren Ausführungsform des Verfahrens wird die reale Abmessung der Materialbahn in einer Regelungsschleife zur Regelung einer Produktionsanlage berücksichtigt. Dadurch können Produktionsparameter, die einen Einfluss auf die Abmessung bzw. die Breite der Materialbahn haben, entsprechend einer Abweichung zwischen der realen Abmessung und einem Sollwert für die betroffene Abmessung geändert werden. Somit kann ein geringer Unterschied zwischen der realen Abmessung und dem Sollwert gehalten werden, so dass die Produktqualität der Materialbahn erhöht werden kann.

Im Folgenden werden bevorzugte Ausführungsbeispiele der Erfindung anhand der beigefügten Zeichnung näher erläutert. In der Zeichnung zeigen
- Fig. 1: eine aus dem Stand der Technik bekannte Anordnung zum berührungslosen Bestimmen von mindestens einer Abmessung einer bewegten Materialbahn in einer Seitenansicht,
- Fig. 2: eine weitere aus dem Stand der Technik bekannte Anordnung zum berührungslosen Bestimmen von mindestens einer Abmessung einer bewegten Materialbahn in einer Seitenansicht,
- Fig. 3: ein erstes Ausführungsbeispiel einer erfindungsgemäßen Anordnung zum berührungslosen Bestimmen von mindestens einer Abmessung einer bewegten Materialbahn in einer Seitenansicht,
- Fig. 4a: die Anordnung der Fig. 3 in einer Draufansicht,
- Fig. 4b: ein momentanes, durch die Anordnung der Fig. 3 erfasstes Kontrastbild,
- Fig. 4c: Lichtintensitätsverteilungen für zwei Pixelreihen des Kontrastbilds der Fig. 4b und
- Fig. 5: ein weiteres Ausführungsbeispiel einer erfindungsgemäßen Anordnung zum berührungslosen Bestimmen von mindestens einer Abmessung einer bewegten Materialbahn in einer Draufansicht.

In der nachfolgenden Beschreibung der verschiedenen Ausführungsbeispiele werden Bauteile und Elemente mit gleicher Funktion und gleicher Wirkungsweise mit denselben Bezugszeichen versehen, auch wenn die Bauteile und Elemente bei den verschiedenen Ausführungsbeispielen in ihrer Dimension oder Form Unterschiede aufweisen können.

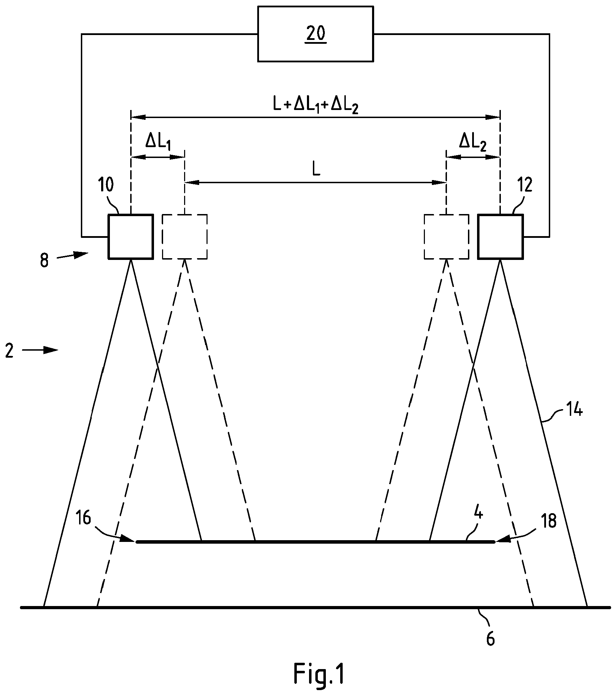

Die Fig. 1 zeigt eine aus dem Stand der Technik bekannte Anordnung zum berührungslosen Bestimmen von mindestens einer Abmessung einer bewegten Materialbahn in einer Seitenansicht. Dabei ist die Materialbahn 4 aus Metall ausgebildet und bewegt sich in einer senkrecht zur Fig. 1 angeordneten Ebene.

Die Anordnung 2 weist eine Hintergrundbeleuchtung 6 und zwei optische Erfassungsmittel 8 in Form einer ersten Zeilenkamera 10 und einer zweiten Zeilenkamera 12 auf. Die Hintergrundbeleuchtung 6, die Materialbahn 4 und die Zeilenkameras 10, 12 bilden in Idealfall drei parallelen Ebenen, wobei die Ebene der Materialbahn 4 zwischen der Ebene der Hintergrundbeleuchtung 6 und der Ebene der Zeilenkameras 10, 12 angeordnet ist.

Grundsätzlich können Hintergrundbeleuchtung 6, die Materialbahn 4 und die Zeilenkameras 10, 12 mit Abweichungen in der Parallelität zu den Ebenen, die in der Fig. 1 bis 5 gezeichnet sind, angeordnet sein. Die Beschreibung anhand von Ebenen dient hier der Übersichtlichkeit.

Die Zeilenkameras 10, 12 sind jeweils dazu eingerichtet, die Lichtintensitätsverteilung in einem streifenförmigen Erfassungsbereich 14 zu erfassen und ein entsprechendes momentanes Kontrastbild zu erzeugen. Jeder Erfassungsbereich 14 erstreckt sich über einen Abschnitt der Materialbahn 4 und eine Bahnkante 16, 18 der Materialbahn 4. Im Ergebnis werden zwei momentane Kontrastbilder aufgenommen, die jeweils Informationen über die Lichtintensitätsverteilung im Bereich einer der Bahnkanten 16, 18 aufweisen.

Die Zeilenkameras 10, 12 sind mit Auswertungsmitteln 20 verbunden, die zum Zusammenführen der zwei erfassten momentanen Kontrastbilder in einem gesamten momentanen Kontrastbild und zum Auswerten des gesamten momentanen Kontrastbilds eingerichtet sind.

In einem Referenzzustand gleicht der Abstand zwischen der ersten Zeilenkamera 10 und der zweiten Zeilenkamera 12 einen Betrag L. Durch Änderung der Umgebungstemperatur sind die erste Zeilenkamera 10 um einen Offset ΔL₁ und die zweite Zeilenkamera 12 um einen Offset ΔL2 versetzt. So ergibt sich ein geänderter Zustand, in dem der Abstand zwischen den Zeilenkameras 10, 12 die Summe L+ΔL₁+ΔL₂ gleicht. Entsprechend sind die Positionen der Bahnkanten in den durch die jeweiligen Zeilenkameras 10, 12 erfassten Kontrastbildern jeweils um ΔL₁ und ΔL₂ verschoben. Folglich entspricht der gesamte Messfehler für das Bestimmen der Breite der Materialbahn 4 dem Betrag ΔL₁+ΔL₂.

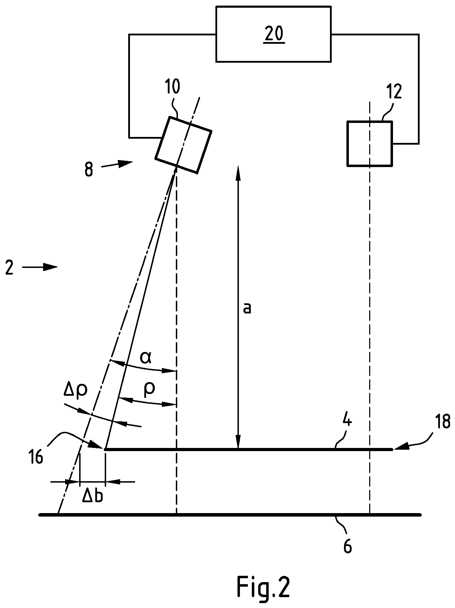

Die Fig. 2 zeigt eine weitere aus dem Stand der Technik bekannte Anordnung zum berührungslosen Bestimmen von mindestens einer Abmessung einer bewegten Materialbahn in einer Seitenansicht. Diese Anordnung 2 unterscheidet sich von der in der Fig. 1 gezeigten Anordnung dadurch, dass sich nicht der Abstand zwischen der ersten Zeilenkamera 10 und der zweiten Zeilenkamera 12, sondern die Winkelposition der ersten Zeilenkamera 10 geändert hat.

Im Referenzzustand ist die erste Zeilenkamera 10 mit einem Abstand a zur Materialbahn 4 senkrecht positioniert. Die erste Zeilenkamera 10 erfasst ein Abschatten der Hintergrundbeleuchtung 6 durch die Bahnkante 16 mit einem Winkel ρ in Bezug auf die Vertikale. Im geänderten Zustand ist die erste Zeilenkamera 10 um einen Winken α verschoben. Folglich ist der Winkel, mit dem die erste Zeilenkamera 10 das Abschatten durch die Bahnkante 16 erfasst, um Δρ geändert. Entsprechend ist die Position der Bahnkante 16 auf dem durch die erste Zeilenkamera 10 erfassten Kontrastbild um Δb = a ^{∗} (tan(ρ+Δρ) - tan(ρ)) verschoben.

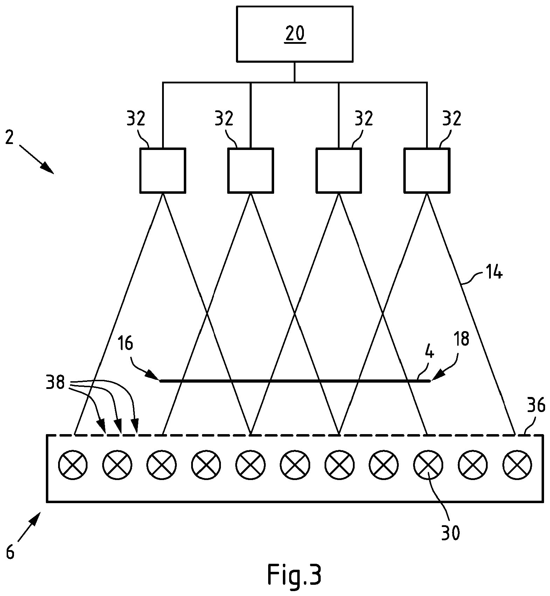

Die Fig. 3 zeigt ein erstes Ausführungsbeispiel einer erfindungsgemäßen Anordnung 2 zum berührungslosen Bestimmen mindestens einer Abmessung einer bewegten Materialbahn 4 in einer Seitenansicht. Die Hintergrundbeleuchtung 6 weist eine Mehrzahl an Leuchtmitteln 30 auf, die möglichst parallel zur Materialbahn 4 angeordnet sind. Oberhalb der Materialbahn 4 sind vier Flächenkameras 32 nebeneinander angeordnet. Die jeweiligen Erfassungsbereiche der vier Flächenkameras 32 bilden zusammen einen gesamten Erfassungsbereich, der sich über die Bahnkanten der Materialbahn 4 hinaus erstreckt.

Zwei von den vier Flächenkameras 32 sind jeweils senkrecht über einer Bahnkante 16 angeordnet, um Messfehler bei eventuellen Höhenabweichungen zwischen der Materialbahn 4 und den Flächenkameras 32 zu vermeiden.

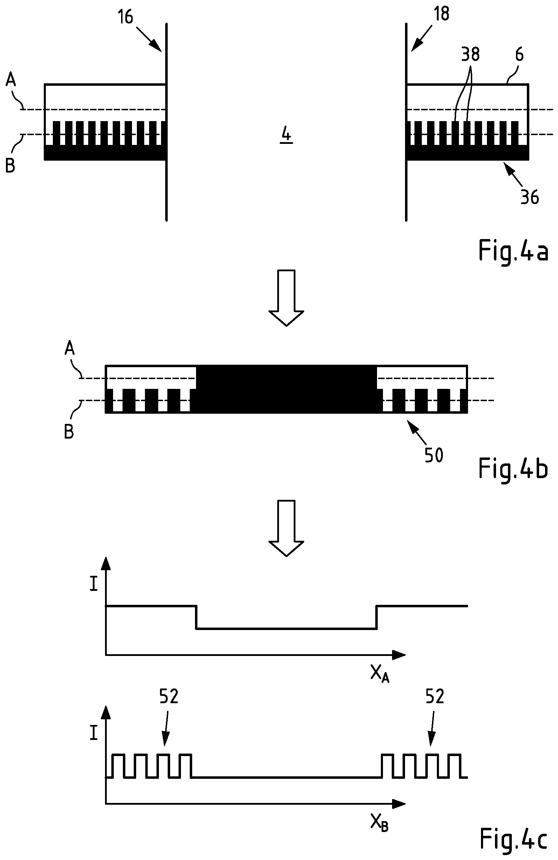

Zwischen der Hintergrundbeleuchtung 6 und der Materialbahn 4 ist ein Abschattungselement 36 in Form einer Schlitzblende mit mehreren Schlitzen 38 angeordnet. Die Schlitzblende 36 und die Materialbahn 4 überlappen die Hintergrundbeleuchtung, wobei die Materialbahn 4 die Schlitzblende 36 nur teilweise abdeckt. Zudem deckt die Schlitzblende 36 die Hintergrundbeleuchtung 6 nur teilweise ab. Der Abschnitt der Hintergrundbeleuchtung 6, der durch die Schlitzblende 36 nicht gedeckt ist, ist in der Fig. 4a sichtbar.

Im Betrieb leuchten die Leuchtmittel 30 in Richtung der Flächenkameras 32. Das so erzeugte Licht ist durch die Schlitzblende 36 und die Materialbahn 4 abgeschattet, so dass das durch die Flächenkameras 32 erfasste momentane Kontrastbild ein entsprechendes Abschatten wiedergibt.

Das Abschattungselement 36 ist mit einem Abstand zu den Flächenkameras 32 angeordnet, der in Idealfall die Schärfentiefe der Flächenkameras 32 ist. Dadurch erfassen die Flächenkameras 32 scharfe Hell/Dunkler-Übergänge, die das Abschatten der Hintergrundbeleuchtung 6 durch das Abschattungselement 36 verursacht.

Die Fig. 4a zeigt die Anordnung 2 der Fig. 3 in einer Draufansicht aus der Perspektive der Flächenkameras 32. Dabei sind die Flächenkameras 32 zur Verbesserung der Übersichtlichkeit nicht gezeigt. Aus dieser Ansicht ist die Überlappung der Materialbahn 4, der Schlitzblende 36 und der Hintergrundbeleuchtung 6 zu erkennen.

Die Fig. 4b zeigt ein momentanes, durch die Anordnung 2 der Fig. 3 erfasstes Kontrastbild 50. Diverse Hell/Dunkel-Übergänge sind erkennbar, die je nach deren Position auf dem Kontrastbild 50 einem Abschatten der Hintergrundbeleuchtung 6 durch die Materialbahn 4 oder einem Abschatten der Hintergrundbeleuchtung 6 durch die Schlitzblende 36 entsprechen.

So ist in der oberen Hälfte des Kontrastbilds 50 zu erkennen, dass die Hintergrundbeleuchtung 6 links frei und rechts durch die Materialbahn 4 abgedeckt ist. In der unteren Hälfte des Kontrastbilds 50 ist die Hintergrundbeleuchtung 6 links durch die Schlitzblende 36 und rechts durch die Materialbahn 4 abgeschattet.

Zur Auswertung des Kontrastbilds 50 wählen die Auswertungsmittel 20 zwei Pixelreihen aus: eine erste Pixelreihe A, die sich im oberen Bereich des Kontrastbilds 50 erstreckt, und eine zweite Pixelreihe B, die sich im unteren Bereich des Kontrastbilds 50 erstreckt.

In der Fig. 4c sind die Lichtintensitätsverteilungen für zwei Pixelreihen A, B des Kontrastbilds 50 der Fig. 4b dargestellt. Die Lichtintensitätsverteilungen sind als Verteilung der durch die Pixel der Pixelreihen A und B erfassten Lichtintensitäten I in Abhängigkeit der jeweiligen Pixelpositionen x_{A} und x_{B} der Pixelreihen A, B gezeigt.

Die Lichtintensitätsverteilung für die erste Pixelreihe A zeigt zwei abrupte Hell/Dunkel-Übergänge. Diese Übergänge entsprechen jeweils einer Bahnkante 16, 18. Aus dem Unterschied zwischen der Pixelposition dieser zwei Übergänge bestimmen die Auswertungsmittel 20 einen Wert für eine momentane Breite der Materialbahn 4.

Die Lichtintensitätsverteilung für die zweite Pixelreihe B zeigt, von links nach rechts, eine Folge 52 von Übergängen, einen Abschnitt mit einer konstanten geringen Lichtintensität und wieder eine Folge 52 von Übergängen zwischen hoher und niedriger Lichtintensität. Aus der Positionen der Übergängen in der Folge 52 bestimmen die Auswertungsmittel 20 die Positionen der Schlitze 38.

In den Auswertungsmitteln 20 ist ein Referenzkontrastbild gespeichert, dass in einem Referenzzustand der Anordnung 2 aufgenommen worden ist. Zudem sind in den Auswertungsmitteln 20 Computerbefehle gespeichert, um die Lichtverteilung der zweiten Pixelreihe B des Kontrastbilds 50 mit der Lichtintensitätsverteilung einer entsprechenden Pixelreihe B in dem Referenzkontrastbild zu vergleichen.

Aus diesem Vergleich bestimmen die Auswertungsmittel 20, ob Unterschiede zwischen den Positionen der Schlitze 38 im momentanen Kontrastbild 50 und der Positionen der Schlitze 38 im Referenzkontrastbild bestehen. Sind Unterscheide vorhanden, so wird bestimmt, welche Änderung der Anordnung 2 diese Unterschiede verursacht und entsprechend wird ein Korrekturfaktor berechnet. Ist zum Beispiel die Position der Schlitze 38 verschoben, so haben sich die Flächenkameras 32 verschoben und der Korrekturfaktor wird als Offset berechnet.

Auf Basis der momentanen Abmessung bzw. Breite und des Korrekturfaktors berechnen die Auswertungsmittel 20 eine reale Abmessung bzw. Breite. Wurde der Korrekturfaktor als Offset berechnet, so addieren die Auswertungsmittel 20 die momentane Abmessung und den Korrekturfaktor zusammen. Als Ergebnis wird eine reale Abmessung, der die Breite der Materialbahn 4 unter Berücksichtigung der Verschiebung der Flächenkameras 32 entspricht.

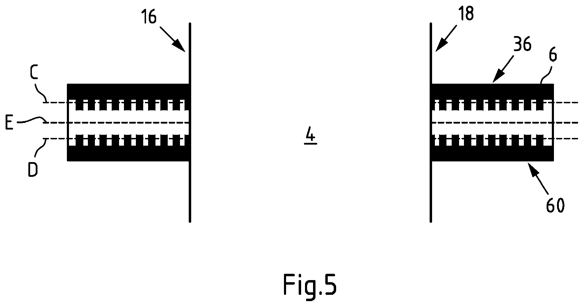

Die Fig. 5 zeigt ein weiteres Ausführungsbeispiel einer erfindungsgemäßen Anordnung 2 zum berührungslosen Bestimmen von mindestens einer Abmessung einer bewegten Materialbahn 4 in einer Draufansicht. Diese Anordnung 2 weist, wie die Anordnung 2 der Fig. 3, eine Hintergrundbeleuchtung 6, Erfassungsmittel 8 in Form von Flächenkameras 32 und Auswertungsmittel 20 auf. Auch wie in der Fig. 3 sind die Flächenkameras 32 zur Verbesserung der Übersichtlichkeit nicht gezeigt.

Diese Anordnung 2 unterscheidet sich von der Anordnung der Fig. 3 dadurch, dass nicht nur ein sondern zwei Abschattungselemente 36, 60 vorgesehen sind. Die zwei Abschattungselemente 36, 60 sind als Schlitzblenden ausgebildet und auf einer Ebene zwischen der Hintergrundbeleuchtung 6 und der Materialbahn 4 angeordnet. Ein Bereich zwischen den zwei Abschattungselementen 36, 60 bleibt zur Bestimmung der momentanen Abmessung frei.

Zur Auswertung des durch diese Anordnung 2 erfassten momentanen Kontrastbilds werden durch die Auswertungsmittel 20 drei spezifischen Pixelreihen ausgewählt. Eine erste Pixelreihe C und eine zweite Pixelreihe D erstrecken sich jeweils über einen oberen, durch eine erste Schlitzblende 36 und durch die Materialbahn 4 abgeschatteten Bereich der Hintergrundbeleuchtung 6 und über einen unteren, durch eine zweite Schlitzblende 60 abgeschatteten Bereich der Hintergrundbeleuchtung 6. Eine dritte Pixelreihe E erstreckt sich über einen mittleren, nur durch die Materialbahn 4 abgeschatteten Bereich der Hintergrundbeleuchtung 6.

Die Flächenkameras 32 sind dazu eingerichtet, eine Vielzahl von momentanen Kontrastbildern mit einem Zeitabstand nacheinander zu erfassen. Die Auswertungsmittel 20 werten die sukzessiven erfassten Kontrastbilder parallel zu dem Erfassen aus, wobei der Zeitabstand zwischen den Auswertungen dem Zeitabstand zwischen den Erfassungen der Kontrastbilder entspricht. Der Zeitabstand ist möglichst gering ausgewählt, so dass für den Nutzer die Erfassung des momentanen Kontrastbilds, der Vergleich zwischen dem momentanen Kontrastbild und dem Referenzkontrastbild und das Bestimmen der Abmessung der Materialbahn 4 kontinuierlich ablaufen.

Weiterhin sind die Auswertungsmittel 20 in einer Regelungsschleife für eine Produktionsanlage umgefasst, so dass die bestimmte reale Abmessung der Materialbahn 4 bei der Regelung der Produktionsanlage berücksichtigt wird.

## Patentansprüche

1. Anordnung zum berührungslosen Bestimmen von mindestens einer Abmessung einer bewegten Materialbahn, insbesondere einer Materialbahn (4) aus lichtundurchlässigem Material,
- mit einer Hintergrundbeleuchtung (6),
- mit optischen Erfassungsmitteln (8) zum Erfassen mindestens eines momentanen Kontrastbilds (50) und
- mit Auswertungsmitteln (20),
- wobei in einer Ebene zwischen dem mindestens einen optischen Erfassungsmittel (8) und der Hintergrundbeleuchtung (6) eine kontinuierliche Bewegung der Materialbahn (4) möglich ist,
- wobei das momentane Kontrastbild (50) zumindest eine Information über mindestens eine Lichtintensität seitlich neben der Materialbahn (4) aufweist,
- wobei mindestens ein die Hintergrundbeleuchtung (6) teilweise abdeckendes Abschattungselement (36) zwischen der Hintergrundbeleuchtung (6) und der Materialbahn (4) angeordnet ist, so dass
- das Abschattungselement (36) teilweise von der Materialbahn (4) abgedeckt ist, und
- wobei das momentane Kontrastbild (50) ein Abschatten der Hintergrundbeleuchtung (6) durch die Materialbahn (4) und durch das Abschattungselement (36) wiedergibt,
**dadurch gekennzeichnet,**
- **dass** die Auswertungsmittel (20) dazu eingerichtet sind, das momentane Kontrastbild (50) mit einem Referenzkontrastbild zu vergleichen,
- wobei das Referenzkontrastbild einem Abschatten der Hintergrundbeleuchtung (6) nur durch das Abschattungselement (36) entspricht, und
- **dass** die Auswertungsmittel (20) dazu eingerichtet sind, aus dem Vergleich einen Korrekturfaktor zu bestimmen und diesen Korrekturfaktor für das Bestimmen der realen Abmessung der Materialbahn (4) zu berücksichtigen,
- wobei die reale Abmessung der tatsächlichen Breite der Materialbahn (4) entspricht, bei dem das momentane Kontrastbild (50) erzeugt wurde.

2. Anordnung nach Anspruch 1,
**dadurch gekennzeichnet,**
**dass** die Auswertungsmittel (20) dazu eingerichtet sind, anhand des momentanen Kontrastbilds (50) eine Abmessung der Materialbahn (4) und die Formgebung des Abschattungselements (36) zeitgleich zu bestimmen.

3. Anordnung nach Anspruch 1 oder 2,
**dadurch gekennzeichnet,**
**dass** das mindestens eine Abschattungselement (36) als Schlitzblende, vorzugsweise mit mindestens zwei Schlitzen (38) ausgebildet ist.

4. Anordnung nach einem der Ansprüche 1 bis 3,
**dadurch gekennzeichnet,**
- **dass** zwei Abschattungselemente (36, 60) auf einer Ebene zwischen der Hintergrundbeleuchtung (6) und der Materialbahn (4) angeordnet sind,
- wobei die zwei Abschattungselemente (36, 60) voneinander beabstandet sind.

5. Anordnung nach einem der Ansprüche 1 bis 4,
**dadurch gekennzeichnet,**
- **dass** mindestens zwei optischen Erfassungsmittel (8) vorgesehen sind,
- wobei die optischen Erfassungsmittel (8) jeweils als Flächenkamera (10, 12) mit mindestens zwei Pixelreihen (A, B) ausgebildet sind.

6. Anordnung nach Anspruch 5,
**dadurch gekennzeichnet,**
- **dass** mindestens vier optische Erfassungsmittel (8) vorgesehen sind,
- wobei jeweils mindestens zwei optischen Erfassungsmittel (8) dazu eingerichtet sind, ein momentanes Kontrastbild (5) im Bereich einer Bahnkante (16, 18) der Materialbahn (4) gleichzeitig zu erfassen.

7. Anordnung nach einem der Ansprüche 1 bis 5,
**dadurch gekennzeichnet,**
- **dass** eine Mehrzahl an optischen Erfassungsmitteln (8) jeweils zum Erfassen mindestens eines zweidimensionalen momentanen Kontrastbilds (50) vorgesehen sind, und
- dass die Auswertungsmittel (20) dazu eingerichtet sind, die jeweiligen Kontrastbilder zu einem gesamten momentanen Kontrastbild zusammenzufügen.

8. Verfahren zum berührungslosen Bestimmen von mindestens einer Abmessung einer kontinuierlich bewegten Materialbahn, insbesondere einer Materialbahn (4) aus lichtundurchlässigem Material und insbesondere durch eine Anordnung (2) nach einem der Ansprüche 1 bis 7,
- bei dem eine erste Seite der Materialbahn (4) mit einer Hintergrundbeleuchtung (6) beleuchtet wird,
- bei dem ein momentanes Kontrastbild (50) auf einer zweiten Seite der Materialbahn (4) erfasst wird,
- wobei das momentane Kontrastbild (50) ein Abschatten der Hintergrundbeleuchtung (6) durch die Materialbahn (4) und durch ein Abschattungselement (36) wiedergibt,
- wobei das Abschattungselement (36) die Hintergrundbeleuchtung (6) teilweise abdeckt und zwischen der Hintergrundbeleuchtung (6) und der Materialbahn (4) angeordnet ist,
- wobei das Abschattungselement (36) teilweise von der Materialbahn (4) abgedeckt ist,
- wobei das momentane Kontrastbild (50) zumindest eine Information über mindestens eine Lichtintensität seitlich neben der Materialbahn (4) aufweist,-bei dem eine momentane Abmessung der Materialbahn (4) bestimmt wird,
- **gekennzeichnet dadurch, dass** das momentane Kontrastbild (50) mit einem Referenzkontrastbild verglichen wird,
- wobei das Referenzkontrastbild einem Abschatten der Hintergrundbeleuchtung (6) nur durch das Abschattungselement (36) entspricht,
- bei dem ein Korrekturfaktor in Abhängigkeit des Ergebnisses des Vergleichs bestimmt wird und
- bei dem eine reale Abmessung der Materialbahn (4) in Abhängigkeit der momentanen Abmessung und unter Berücksichtigung des Korrekturfaktors bestimmt wird,
- wobei die reale Abmessung der tatsächlichen Breite der Materialbahn (4) entspricht, bei dem das momentane Kontrastbild (50) erzeugt wurde.

9. Verfahren nach Anspruch 8,
bei dem die Erfassung des momentanen Kontrastbilds (50), der Vergleich zwischen dem momentanen Kontrastbild (50) und dem Referenzkontrastbild und das Bestimmen der Abmessung der Materialbahn (4) kontinuierlich ablaufen.

10. Verfahren nach Anspruch 8 oder 9,
bei dem die reale Abmessung der Materialbahn (4) in einer Regelungsschleife zur Regelung einer Produktionsanlage berücksichtigt wird.

## Claims

1. Arrangement for contactless determination of at least one dimension of a moving material web, in particular a material web (4) made of opaque material,
- with a backlight (6),
- with optical detection means (8) for detecting at least one momentary contrast image (50), and
- with evaluation means (20),
- wherein a continuous movement of the material web (4) is possible in a plane between the at least one optical detection means (8) and the backlight (6),
- wherein the momentary contrast image (50) has at least one information about at least one light intensity laterally adjacent to the material web (4),
- wherein at least one shading element (36) partially covering the backlight (6) is arranged between the backlight (6) and the material web (4) so that the shading element (36) is partially covered by the material web (4), and
- wherein the momentary contrast image (50) represents a shading of the backlight (6) by the material web (4) and by the shading element (36),
**characterized**
- **in that** the evaluation means (20) are configured to compare the momentary contrast image (50) with a reference contrast image,
- wherein the reference contrast image corresponds to a shading of the backlight (6) only by the shading element (36), and
- **in that** the evaluation means (20) are configured to determine a correction factor from the comparison and to take this correction factor into account for determining the real dimension of the material web (4),
- wherein the real dimension corresponds to the actual width of the web (4) at which the momentary contrast image (50) was generated.

2. Arrangement according to claim 1,
**characterized**
**in that** the evaluation means (20) are configured to determine simultaneously a dimension of the material web (4) and the shaping of the shading element (36) on the basis of the momentary contrast image (50).

3. Arrangement according to claim 1 or 2,
**characterized**
**in that** the at least one shading element (36) is formed as a slit screen, preferably with at least two slits (38).

4. Arrangement according to one of claims 1 to 3,
**characterized**
- **in that** two shading elements (36, 60) are arranged on a plane between the backlight (6) and the material web (4),
- wherein the two shading elements (36, 60) are spaced apart.

5. Arrangement according to one of claims 1 to 4,
**characterized**
- **in that** at least two optical detection means (8) are provided,
- wherein the optical detection means (8) each are formed as area scan camera (10; 12) with at least two rows of pixels (A, B).

6. Arrangement according to claim 5,
**characterized**
- **in that** at least four optical detection means (8) are provided,
- wherein at least two optical detection means (8), respectively, are configured to simultaneously detect a momentary contrast image (5) in the area of a web edge (16, 18) of the material web (4).

7. Arrangement according to one of the claims 1 to 5,
**characterized**
- **in that** a plurality of optical detection means (8) are each provided for detecting at least one two-dimensional momentary contrast image (50), and
- **in that** the evaluation means (20) are configured to combine the respective contrast images into an overall momentary contrast image.

8. Method for contactless determination of at least one dimension of a continuously moving material web, in particular a material web (4) made of opaque material and in particular by an arrangement (2) according to one of the claims 1 to 7,
- wherein a first side of the material web (4) is illuminated with a backlight (6),
- wherein a momentary contrast image (50) is detected on a second side of the material web (4),
- wherein the momentary contrast image (50) represents a shading of the backlight (6) by the material web (4) and by a shading element (36),
- wherein the shading element (36) partially covers the backlight (6) and is arranged between the backlight (6) and the material web (4),
- wherein the shading element (36) is partially covered by the material web (4),
- wherein the momentary contrast image (50) has at least one information about at least one light intensity laterally adjacent to the material web (4),
- wherein a momentary dimension of the material web (4) is determined,
**characterized in that**
- the momentary contrast image (50) is compared with a reference contrast image,
- wherein the reference contrast image corresponds to a shading of the backlight (6) only by the shading element (36),
- wherein a correction factor is determined depending on the result of the comparison, and
- wherein a real dimension of the material web (4) is determined depending on the momentary dimension and taking into account the correction factor,
- wherein the real dimension corresponds to the actual width of the web (4) at which the momentary contrast image (50) was generated.

9. Method according to claim 8,
wherein the detection of the momentary contrast image (50), the comparison between the momentary contrast image (50) and the reference contrast image and the determination of the dimension of the material web (4) run continuously.

10. Method according to claim 8 or 9,
wherein the real dimension of the material web (4) is taken into account in a control loop for controlling a production plant.

## Revendications

1. Arrangement pour déterminer sans contact au moins une dimension d'une bande de matériau en mouvement, en particulier une bande de matériau (4) en matériau opaque,
- avec un éclairage d'arrière-plan (6),
- avec des moyens de détection optiques (8) pour détecter au moins une image de contraste momentanée (50) et
- avec des moyens d'évaluation (20),
- un mouvement continu de la bande de matériau (4) étant possible dans un plan entre l'au moins un moyen de détection optique (8) et l'éclairage d'arrière-plan (6),
- l'image de contraste momentanée (50) ayant au moins une information sur au moins une intensité lumineuse latéralement à côté de la bande de matériau (4),
- au moins un élément d'occultation (36) recouvrant partiellement l'éclairage d'arrière-plan (6) étant arrangé entre l'éclairage d'arrière-plan (6) et la bande de matériau (4), de sorte que l'élément d'occultation (36) est partiellement couvert par la bande de matériau (4), et
- l'image de contraste momentanée (50) reproduisant une occultation de l'éclairage d'arrière-plan (6) par la bande de matériau (4) et par l'élément d'occultation (36),
**caractérisé**
- **en ce que** les moyens d'évaluation (20) sont conçus pour comparer l'image de contraste momentanée (50) à une image de contraste de référence,
- l'image de contraste de référence correspondant à une occultation de l'éclairage d'arrière-plan (6) uniquement par l'élément d'occultation (36), et
- **en ce que** les moyens d'évaluation (20) sont configurés pour déterminer un facteur de correction à partir de la comparaison et pour tenir compte de ce facteur de correction pour la détermination de la dimension réelle de la bande de matériau (4),
- la dimension réelle correspondant à la largeur effective de la bande de matériau (4) pour laquelle l'image de contraste momentanée (50) a été générée.

2. Arrangement selon la revendication 1,
**caractérisé**
**en ce que** les moyens d'évaluation (20) sont configurés pour déterminer simultanément, à l'aide de l'image de contraste momentanée (50), une dimension de la bande de matériau (4) et la forme de l'élément d'occultation (36).

3. Arrangement selon la revendication 1 ou 2,
**caractérisé**
**en ce que** l'au moins un élément d'occultation (36) est formé en tant qu'écran à fente, de préférence avec au moins deux fentes (38).

4. Arrangement selon l'une des revendications 1 à 3,
**caractérisé**
- **en ce que** deux éléments d'occultation (36, 60) sont arrangés sur un plan entre l'éclairage d'arrière-plan (6) et la bande de matériau (4),
- les deux éléments d'occultation (36, 60) étant espacés l'un de l'autre.

5. Arrangement selon l'une quelconque des revendications 1 à 4,
**caractérisé**
- **en ce qu'**au moins deux moyens de détection optique (8) sont prévus,
- les moyens optiques de détection (8) étant respectivement formés en tant que caméras matricielles (10, 12) avec au moins deux rangées de pixels (A, B).

6. Arrangement selon la revendication 5,
**caractérisé**
- **en ce qu'**au moins quatre moyens de détection optiques (8) sont prévus,
- au moins deux moyens de détection optiques (8) étant respectivement configurés pour détecter simultanément une image de contraste momentanée (5) dans la zone d'un bord de bande (16,18) de la bande de matériau (4).

7. Arrangement selon l'une des revendications 1 à 5,
**caractérisé**
- **en ce qu'**une pluralité de moyens de détection optiques (8) sont prévus chacun pour détecter au moins une image de contraste momentanée bidimensionnelle (50), et
- **en ce que** les moyens d'évaluation (20) sont configurés pour assembler les images de contraste respectives en une image de contraste momentanée globale.

8. Procédé de détermination sans contact d'au moins une dimension d'une bande de matériau en mouvement continu, notamment d'une bande de matériau (4) en matériau opaque et en particulier par un arrangement (2) selon l'une des revendications 1 à 7,
- dans lequel une première face de la bande de matériau (4) est éclairée par un éclairage d'arrière-plan (6),
- dans lequel une image de contraste momentanée (50) est détectée sur une deuxième face de la bande de matériau (4),
- l'image de contraste momentanée (50) reproduisant une occultation de l'éclairage d'arrière-plan (6) par la bande de matériau (4) et par un élément d'occultation (36),
- l'élément d'occultation (36) couvrant partiellement l'éclairage d'arrière-plan (6) et étant arrangé entre l'éclairage d'arrière-plan (6) et la bande de matériau (4),
- l'élément d'occultation (36) étant partiellement couvert par la bande de matériau (4),
- l'image de contraste momentanée (50) ayant au moins une information sur au moins une intensité lumineuse latéralement à côté de la bande de matériau (4),
- dans lequel une dimension momentanée de la bande de matériau (4) est déterminée,
**caractérisé en ce que**
- l'image de contraste momentanée (50) est comparée à une image de contraste de référence,
- l'image de contraste de référence correspondant à une occultation de l'éclairage d'arrière-plan (6) uniquement par l'élément d'occultation (36),
- dans lequel un facteur de correction est déterminé en fonction du résultat de la comparaison et
- dans lequel une dimension réelle de la bande de matériau (4) est déterminée en fonction de la dimension momentanée et en tenant compte du facteur de correction,
- la dimension réelle correspondant à la largeur réelle de la bande de matériau (4) pour laquelle l'image de contraste momentanée (50) a été générée.

9. Procédé selon la revendication 8,
dans lequel la détection de l'image de contraste momentanée (50), la comparaison entre l'image de contraste momentanée (50) et l'image de contraste de référence et la détermination de la dimension de la bande de matériau (4) se déroulent en continu.

10. Procédé selon la revendication 8 ou 9,
dans lequel la dimension réelle de la bande de matériau (4) est prise en compte dans une boucle de régulation pour la régulation d'une installation de production.
